# EUROPEAN PATENT APPLICATION

(11) **EP 4 722 511 A1**
(43) Date of publication of application: **08.04.2026**
(21) Application number: 24845093.4
(22) Date of filing: 11.03.2024
(51) Int. Cl.: F02B 39/00, F02B 37/04

(54) **ELECTRIC SUPERCHARGER**

(30) Priority: 26.07.2023 JP 2023121410
(71) Applicant: IHI Corporation, Tokyo 135-8710 (JP)
(72) Inventor: INOMATA, Tatsumi, Tokyo 135-8710 (JP); YUMOTO, Ryosuke, Tokyo 135-8710 (JP); IIJIMA, Kai, Tokyo 135-8710 (JP)
(74) Representative: TBK
(86) International application number: PCT/JP2024/009403
(87) International publication number: WO 2025/022708

(57) **Abstract**

An electric turbocharger includes a compressor, and a motor unit including a motor case joined to the compressor in an axial direction and applying a torque to an impeller of the compressor, in which at a joint portion between the compressor and the motor case, a gap region, in which the compressor and the motor case face each other in the axial direction with a gap therebetween, is provided.

## Description

### Technical Field

The present disclosure relates to an electric turbocharger.

### Background Art

Conventionally, an electric turbocharger having a structure in which a compressor and a motor unit that applies a torque to an impeller of the compressor are connected in a rotation axis direction is known (see Patent Literature 1 below). In this type of electric turbocharger, heat is generated in the compressor due to adiabatic compression of a gas, and a part of the heat is conducted from the compressor to the motor side.

### Citation List

### Patent Literature

[Patent Literature 1] Japanese Unexamined Patent Publication No. 2009-024576

### Summary of Invention

### Technical Problem

However, if a large amount of heat is conducted from the compressor to the motor side, it may cause an increase in temperature of the motor, and operating performance of the motor may be reduced by the heat. Also, since the heat from the compressor is eventually processed by the cooling system that cools the motor, the heat increases a load on the cooling system. Therefore, the present disclosure describes an electric turbocharger that suppresses transfer of heat from a compressor to a motor unit.

### Solution to Problem

An electric turbocharger according to one aspect of the present disclosure includes a compressor, and a motor unit including a motor case joined to the compressor in a rotation axis direction and applying a torque to an impeller of the compressor, in which at a joint portion between the compressor and the motor case, a gap region, in which the compressor and the motor case face each other in the rotation axis direction with a gap therebetween, is provided.

### Advantageous Effects of Invention

According to the present disclosure, it is possible to provide an electric turbocharger that suppresses transfer of heat from a compressor to a motor unit.

### Brief Description of Drawings

FIG. 1 is a cross-sectional view illustrating an electric turbocharger according to an embodiment.
FIG. 2 is an enlarged cross-sectional view illustrating a part of the electric turbocharger of FIG. 1.
FIG. 3 is a view of a joint surface of a motor case, which is joined to a compressor, from an axial direction.
FIG. 4 is a view of a modified example of the joint surface of the motor case, which is joined to the compressor, from the axial direction.

### Description of Embodiments

The gist of the present disclosure lies in the following [1] to [7].
[1] An electric turbocharger including a compressor, and a motor unit including a motor case joined to the compressor in a rotation axis direction and applying a torque to an impeller of the compressor, in which at a joint portion between the compressor and the motor case, a gap region, in which the compressor and the motor case face each other in the rotation axis direction with a gap therebetween, is provided.
[2] The electric turbocharger described in [1], in which a radial position of an outermost circumferential portion of the gap region is the same as or positioned outward of a radial position of a diffuser outlet of the compressor, and is the same as or positioned inward of a radial position of an outermost circumferential portion of a scroll of the compressor.
[3] The electric turbocharger described in [1] or [2], in which a radial position of a diffuser outlet of the compressor is positioned inward of a radial position of an outermost circumferential portion of the gap region and positioned outward of a radial position of an innermost circumferential portion of the gap region.
[4] The electric turbocharger described in any one of [1] to [3], in which the gap region is divided into a plurality of regions in a circumferential direction.
[5] The electric turbocharger described in any one of [1] to [4], in which a projected area of the gap region projected in the rotation axis direction is 40% or more of a total projected area of the joint portion projected in the rotation axis direction.
[6] The electric turbocharger described in any one of [1] to [5], in which a cooling air flow path providing communication between the outside of the motor case and a space in which a bearing of the motor unit is housed, and through which a cooling air for cooling the bearing flows is formed in the motor case, and the gap region is provided at a position that does not overlap a cooling air flow path when viewed from the rotation axis direction.
[7] The electric turbocharger described in any one of [1] to [6], in which the compressor includes a compressor housing, and a diffuser plate forming a diffuser between itself and the compressor housing and joined to the motor case at the joint portion, and the diffuser plate is made of stainless steel.

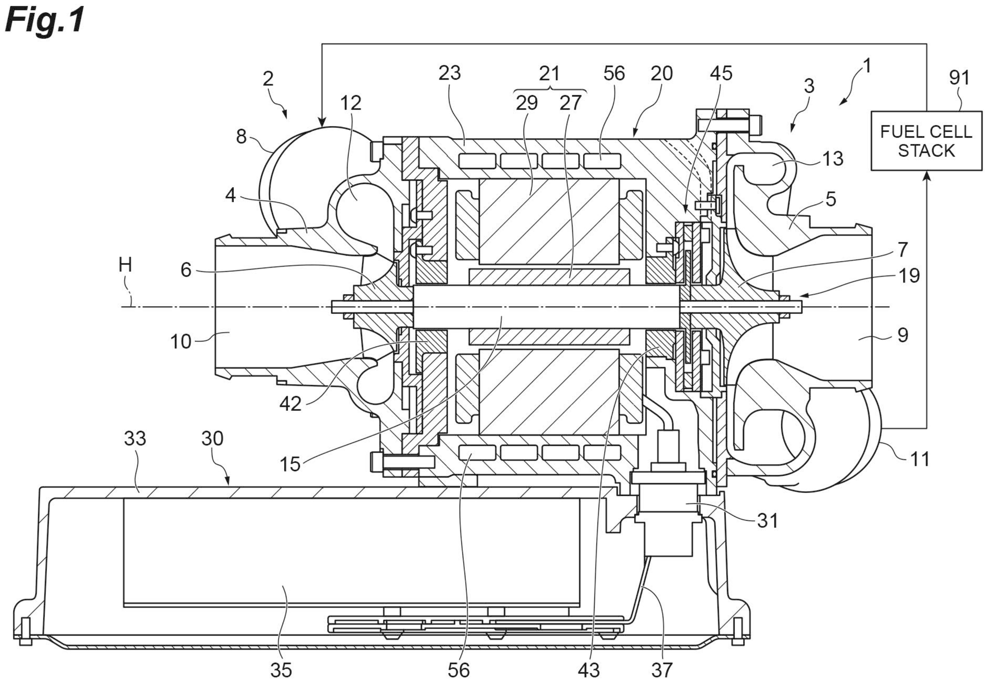

Hereinafter, an electric turbocharger 1 according to an embodiment of the present disclosure will be described with reference to the drawings. In the drawings, the same or equivalent elements will be denoted by the same reference signs, and duplicate descriptions will be omitted. Further, in the drawings, characteristic portions may be illustrated with appropriate exaggeration, and therefore dimensional ratios of each portion may not be consistent between the drawings. Also, in the following description, when the terms "axial direction," "radial direction," and "circumferential direction" are simply used, they respectively refer to a rotation axis direction (direction of a rotation axis H), a rotation radial direction, and a rotation circumferential direction of a rotating shaft 15 of the electric turbocharger 1. Also, in the direction of the rotation axis H, a turbine 2 side (left side in FIG. 1) of the electric turbocharger 1 may be simply referred to as a "turbine side" and a compressor 3 side (right side in FIG. 1) may be simply referred to as a "compressor side".

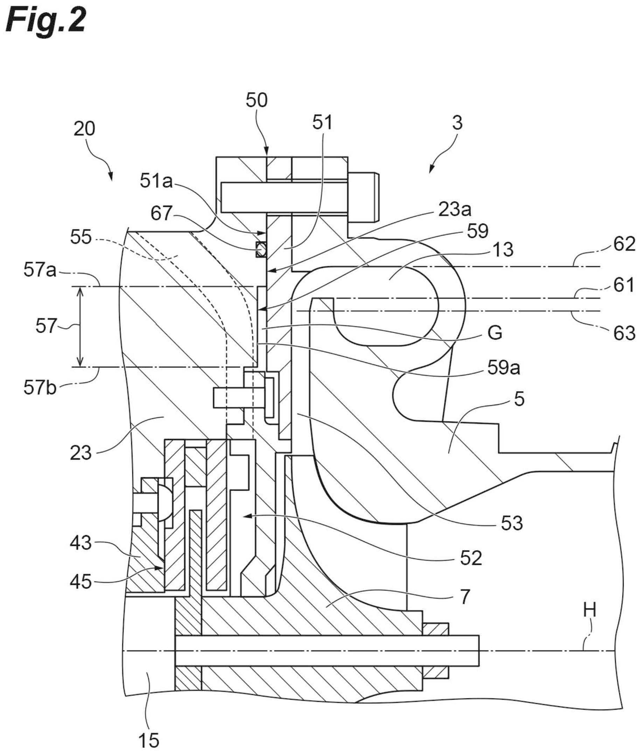

FIG. 1 is a cross-sectional view illustrating the electric turbocharger 1, and FIG. 2 is an enlarged cross-sectional view illustrating a part thereof. The electric turbocharger 1 of the present embodiment is an electric-assist type turbocharger mounted on a fuel cell vehicle. The electric turbocharger 1 supplies a generated compressed air to a fuel cell stack 91 to increase an amount of oxygen involved in a chemical reaction in the fuel cell stack 91.

The electric turbocharger 1 includes the turbine 2 and the compressor 3. The electric turbocharger 1 further includes a motor unit 20 installed between the turbine 2 and the compressor 3, and an inverter unit 30 that supplies power to the motor unit 20.

The turbine 2 includes a turbine housing 4 and a turbine impeller 6 housed in the turbine housing 4. The turbine housing 4 includes a scroll 12 extending in the circumferential direction around the turbine impeller 6. Also, the turbine housing 4 includes an exhaust gas inlet 8 and an exhaust gas outlet 10. The compressor 3 includes a compressor housing 5 and a compressor impeller 7 housed in the compressor housing 5. The compressor housing 5 includes a scroll 13 extending in the circumferential direction around the compressor impeller 7. Also, an intake port 9 and a discharge port 11 are provided in the compressor housing 5. The compressor 3 has a structure of a centrifugal compressor, and the compressor impeller 7 discharges air introduced in the axial direction from the intake port 9 outward in the radial direction toward the scroll 13.

Also, the electric turbocharger 1 has the rotating shaft 15 connecting the turbine impeller 6 and the compressor impeller 7. That is, the turbine impeller 6 is provided at one end of the rotating shaft 15, and the compressor impeller 7 is provided at the other end of the rotating shaft 15. The turbine impeller 6, the rotating shaft 15, and the compressor impeller 7 constitute a rotating body 19 that integrally rotates around the rotation axis H.

The motor unit 20 includes a motor 21 and a motor case 23 that houses the motor 21. The motor 21 is, for example, a brushless AC motor and includes a rotor 27 as a rotating element and a stator 29 as a stationary element. The rotor 27 is fixed to the rotating shaft 15 and is positioned between the turbine impeller 6 and the compressor impeller 7. The stator 29 is disposed to surround a circumference of the rotor 27 and is fixed to the motor case 23.

Also, the rotating shaft 15 penetrates the motor case 23 in the axial direction. At penetration portions of the rotating shaft 15, a pair of radial bearings 42 and 43 supporting the rotating shaft 15 are provided in the motor case 23. The radial bearing 42 on the turbine side is positioned between the motor 21 and the turbine impeller 6. The radial bearing 43 on the compressor side is positioned between the motor 21 and the compressor impeller 7. A thrust bearing 45 of the rotating shaft 15 is provided in the motor case 23. The thrust bearing 45 is positioned between the radial bearing 43 and the compressor impeller 7. The radial bearings 42 and 43 and the thrust bearing 45 are air bearings.

The inverter unit 30 is connected to the motor unit 20 via a connector 31. The inverter unit 30 includes an inverter case 33 positioned outside the motor case 23, an inverter main body 35 and a busbar 37 housed in the inverter case 33. The inverter main body 35 is electrically connected to the stator 29 of the motor 21 via the busbar 37 and the connector 31.

In this electric turbocharger 1, an exhaust gas discharged from the fuel cell stack 91 flows into the turbine housing 4 through the exhaust gas inlet 8. The exhaust gas then flows into the turbine impeller 6 through the scroll 12, causing the turbine impeller 6 to rotate around the rotation axis H. Thereafter, the exhaust gas flows out of the turbine housing 4 through the exhaust gas outlet 10. When the turbine impeller 6 rotates as described above, the compressor impeller 7 rotates via the rotating shaft 15. The rotating compressor impeller 7 draws in outside air through the intake port 9. This air passes through the compressor impeller 7 and the scroll 13 to be compressed and is discharged from the discharge port 11. The compressed air discharged from the discharge port 11 is supplied to the fuel cell stack 91 described above.

If a torque of the rotating shaft 15 is insufficient, the motor 21 applies a torque to the rotating shaft 15 to compensate for the deficiency. That is, when a current is supplied from the inverter main body 35 to a coil of the stator 29, a magnetic field is generated around the stator 29, and this magnetic field exerts a circumferential force on permanent magnets of the rotor 27, resulting in a torque being applied to the rotating shaft 15.

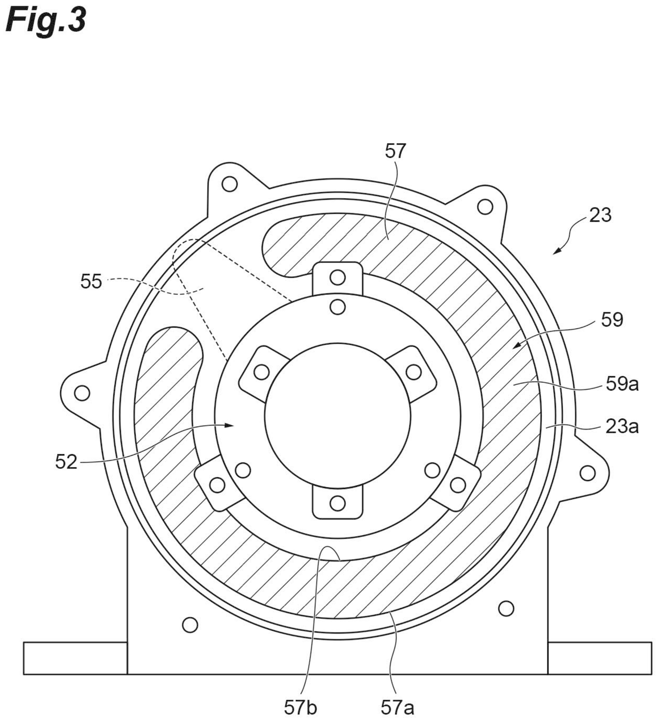

Next, a structure in the vicinity of a joint portion 50 between the compressor 3 and the motor unit 20 will be described. FIG. 2 is an enlarged cross-sectional view illustrating the vicinity of the joint portion 50. FIG. 3 is a view of a joint surface 23a of the motor case 23, which is joined to the compressor 3, from the axial direction. The compressor 3 includes a diffuser plate 51 in addition to the compressor housing 5 and the compressor impeller 7 described above. The diffuser plate 51 is positioned between the compressor housing 5 and the motor case 23. The diffuser plate 51 is joined to the turbine side of the compressor housing 5 and to the compressor side of the motor case 23. In a radially outer region of the compressor impeller 7, a diffuser 53, which is axially sandwiched between the diffuser plate 51 and the compressor housing 5, is formed. As a material for the diffuser plate 51, a metal with a low thermal conductivity such as, for example, stainless steel, is employed. A material of the diffuser plate 51 in the present embodiment is stainless steel.

The radial bearing 43 and the thrust bearing 45, which are positioned around the rotating shaft 15, are attached to the motor case 23. A cooling air flow path 55 is formed in the motor case 23. The cooling air flow path 55 provides communication between the outside of the motor case 23 and a bearing housing space 52. The bearing housing space 52 is a space in which the radial bearing 43 and the thrust bearing 45 are housed. The cooling air flow path 55 allows cooling air sent from a cooling air source (not illustrated) outside the motor unit 20 to flow to the radial bearing 43 and the thrust bearing 45. The radial bearing 43 and the thrust bearing 45 are cooled by the cooling air. The cooling air passes through the radial bearing 43 and the thrust bearing 45, then passes through the inside of the motor case 23, and is finally discharged from the exhaust gas outlet 10 together with the exhaust gas from the turbine 2. Further, as another structure for cooling the motor 21, a cooling water flow path 56 (see FIG. 1) is provided in the motor case 23. The cooling water flow path 56 is formed in a spiral shape within an outer wall portion of the motor case 23, and cools the motor 21 by causing cooling water supplied from an external cooling water source (not illustrated) to flow therethrough.

At the joint portion 50 between the diffuser plate 51 and the motor case 23, a gap region 57, in which the diffuser plate 51 and the motor case 23 face each other in the axial direction with a gap G therebetween, is provided. More specifically, at the joint portion 50, the diffuser plate 51 and the motor case 23 are joined to each other with the joint surface 23a of the motor case 23 in contact with the joint surface 51a of the diffuser plate 51. Also, there is a recessed portion 59 in the joint surface 23a of the motor case 23. The recessed portion 59 is formed by a partial region of the joint surface 23a being slightly recessed toward the turbine side. A bottom surface 59a of the recessed portion 59 is a plane orthogonal to the axial direction and faces the joint surface 51a of the diffuser plate 51 in the axial direction with the gap G therebetween. A size of the gap G is, for example, about 1 mm. A region of the joint portion 50 in which the recessed portion 59 as described above is present corresponds to the gap region 57 described above. The recessed portion 59 is illustrated with hatching in FIG. 3.

When viewed from the axial direction, the gap region 57 extends in a belt-like shape in the circumferential direction with a predetermined radial width along a circular arc centered on the rotation axis H. When viewed from the axial direction, the gap region 57 is positioned at a position that does not overlap the cooling air flow path 55. A radial position of an outermost circumferential portion 57a of the gap region 57 is outside a radial position 61 of an outlet of the diffuser 53. Also, the radial position of the outermost circumferential portion 57a is positioned on an inner side in the radial direction with respect to a radial position 62 of an outermost circumferential portion of the scroll 13 in the compressor 3. The radial position of the outermost circumferential portion 57a may be the same as the radial position 61 of the outlet of the diffuser 53 or may be the same as the radial position 62 of the outermost circumferential portion of the scroll 13 in the compressor 3.

Also, the radial position 61 of the outlet of the diffuser 53 is positioned inward of the radial position of the outermost circumferential portion 57a of the gap region 57 and positioned outward of a radial position of an innermost circumferential portion 57b of the gap region 57.

Also, theoretically, there is a point in the diffuser 53 at which a compressed air reaches its highest pressure. If a radial position of this point is denoted by reference sign 63 as illustrated in FIG. 2, a flow path width of the diffuser 53 in the axial direction is constant on an inner side of the radial position 63, and the flow path width of the diffuser 53 in the axial direction increases from the radial position 63 toward the outlet of the diffuser 53 (radial position 61). The radial position 63 is positioned inward of the radial position of the outermost circumferential portion 57a of the gap region 57 and positioned outward of the radial position of the innermost circumferential portion 57b of the gap region 57.

Also, an O-ring 67 sandwiched between the diffuser plate 51 and the motor case 23 is provided in the vicinity of the outermost circumference of the joint portion 50. The O-ring 67 prevents leakage of compressed air or the like to the outside through the joint portion 50. The outermost circumferential portion 57a of the gap region 57 is positioned on an inner side in the radial direction relative to the position of the O-ring 67.

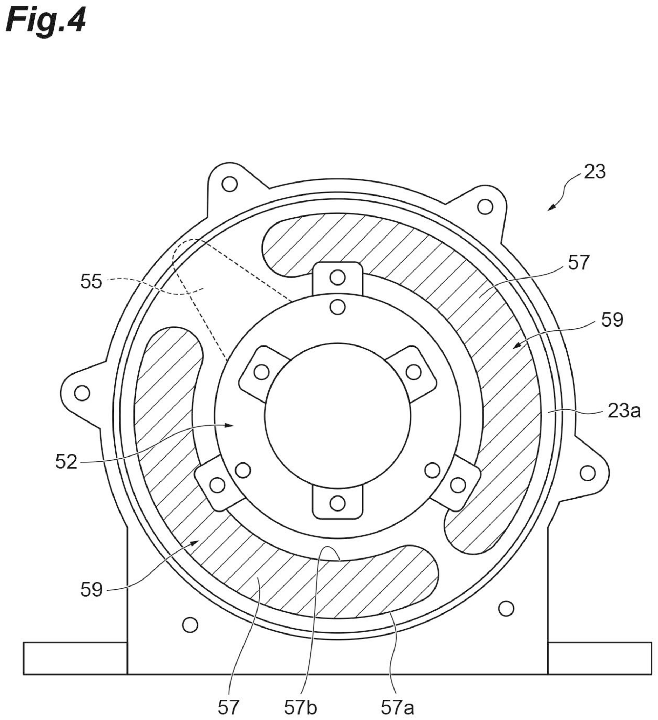

A projected area of the gap region 57 projected in the axial direction is preferably 40% or more of a total projected area of the joint portion 50 projected in the axial direction. In this case, the total projected area of the joint portion 50 refers to a combined projected area of the projected area of the gap region 57 and the projected area of all portions in which the diffuser plate 51 and the motor case 23 are in contact with each other. Also, the projected area of the gap region 57 described above corresponds to an area of the hatched portion (recessed portion 59) in FIG. 3. Also, the gap region 57 may be divided into a plurality of regions in the circumferential direction as illustrated in FIG. 4. In the example of FIG. 4, the gap region 57 is divided into two in the circumferential direction, but the gap region 57 may be divided into three or more.

An operation and effects of the electric turbocharger 1 described above will be described. In the electric turbocharger 1, the diffuser plate 51 of the compressor 3 and the motor case 23 of the motor unit 20 are joined in the axial direction at the joint portion 50. In the compressor 3, heat is generated by adiabatic compression of air. If a large amount of the heat is conducted to the motor unit 20, it may cause an increase in temperature of the motor 21, and operating performance of the motor 21 may be reduced by the heat. Also, a load on the cooling system, including the cooling air flow path 55 and cooling water flow path 56, is increased.

In contrast, in the electric turbocharger 1, the gap region 57, in which the diffuser plate 51 and the motor case 23 face each other in the axial direction with the gap G therebetween, is provided in the joint portion 50. Due to the presence of the gap G, heat transfer from the diffuser plate 51 to the motor case 23 is reduced, that is, transfer of heat from the compressor 3 to the motor unit 20 is suppressed. Therefore, a decrease in continuous operation performance of the motor 21 due to a temperature is suppressed. Also, the load on the cooling system for cooling the motor unit 20 can be reduced.

Also, when the projected area of the gap region 57 projected in the axial direction is set to 40% or more of the total projected area of the joint portion 50 projected in the axial direction as described above, the operation and effects described above can be efficiently achieved.

Also, when a metal with a low thermal conductivity such as, for example, stainless steel is employed as the material of the diffuser plate 51 as described above, transfer of heat from the compressor 3 to the motor unit 20 can be suppressed even in the portion in which the diffuser plate 51 and the motor case 23 are in contact.

Here, the pressure of the compressed air in the compressor 3 reaches its maximum at a point in the vicinity of the radial position 61 of the outlet of the diffuser 53. Therefore, the temperature due to adiabatic compression of air is also considered to reach its maximum at the point in the vicinity of the radial position 61. In contrast, the radial position of the outermost circumferential portion 57a of the gap region 57 is positioned outward of the radial position 61 of the outlet of the diffuser 53 and positioned inward of the radial position 62 of the outermost circumferential portion of the scroll 13. In this way, since the radial position 61 described above can become particularly high in temperature, the gap region 57 extends outward to a position beyond the point of the radial position 61. As a result, heat transfer from the diffuser plate 51 to the motor case 23 is further reduced more efficiently.

Also, the radial position 61 of the outlet of the diffuser 53 is positioned inward of the radial position of the outermost circumferential portion 57a of the gap region 57 and positioned outward of the radial position of the innermost circumferential portion 57b of the gap region 57. In this way, the presence of the gap region 57, which radially spans across the above-described point of the radial position 61 that can become particularly high in temperature, allows heat transfer from the diffuser plate 51 to the motor case 23 to be further reduced more efficiently.

Also, the radial position 63 of the point at which the air compressed by the compressor 3 theoretically reaches the highest pressure is positioned inward of the radial position of the outermost circumferential portion 57a of the gap region 57 and positioned outward of the radial position of the innermost circumferential portion 57b of the gap region 57. In this way, the presence of the gap region 57, which radially spans across the above-described point of the radial position 63 that can theoretically become particularly high in temperature, allows heat transfer from the diffuser plate 51 to the motor case 23 to be further reduced more efficiently.

Also, if the cooling air flow path 55 and the recessed portion 59 are assumed to be provided in the motor case 23 to overlap each other in the axial direction, a portion between the cooling air flow path 55 and the bottom surface 59a of the recessed portion 59 would become thin. In contrast, in the electric turbocharger 1, since the gap region 57 is provided at a position that does not overlap the cooling air flow path 55 when viewed from the axial direction, it is possible to ensure a sufficient thickness of the motor case 23 at the portion in which the cooling air flow path 55 is provided. Although there is no gap region 57 and the diffuser plate 51 is in contact with the motor case 23 in that region, most of the heat transferred from the diffuser plate 51 to the motor case 23 is removed by the cooling air passing through the cooling air flow path 55.

The present disclosure can be implemented in various forms including the above-described embodiment with various modifications and improvements made on the basis of the knowledge of those skilled in the art. Also, it is possible to form modified examples by utilizing the technical features described in the above-described embodiment. The configurations of the respective embodiments and the like may be appropriately combined and used. For example, in the embodiment, the gap region 57 is provided by forming the recessed portion 59 on the joint surface 23a of the motor case 23, but the gap region may be provided by forming a recessed portion on the joint surface 51a of the diffuser plate 51.

### Reference Signs List

1 Electric turbocharger
3 Compressor
20 Motor unit
23 Motor case
50 Joint portion
51 Diffuser plate
53 Diffuser
55 Cooling air flow path
57 Gap region
57a Outermost circumferential portion
57b Innermost circumferential portion
61 Radial position of outlet of diffuser
62 Radial position of outermost circumferential portion of scroll
G Gap
H Rotation axis

## Claims

1. An electric turbocharger comprising:
a compressor; and
a motor unit including a motor case joined to the compressor in a rotation axis direction and applying a torque to an impeller of the compressor, wherein
at a joint portion between the compressor and the motor case, a gap region, in which the compressor and the motor case face each other in the rotation axis direction with a gap therebetween, is provided.

2. The electric turbocharger according to claim 1, wherein a radial position of an outermost circumferential portion of the gap region is the same as or positioned outward of a radial position of a diffuser outlet of the compressor, and is the same as or positioned inward of a radial position of an outermost circumferential portion of a scroll of the compressor.

3. The electric turbocharger according to claim 1, wherein a radial position of a diffuser outlet of the compressor is positioned inward of a radial position of an outermost circumferential portion of the gap region and positioned outward of a radial position of an innermost circumferential portion of the gap region.

4. The electric turbocharger according to claim 1, wherein the gap region is divided into a plurality of regions in a circumferential direction.

5. The electric turbocharger according to claim 1, wherein a projected area of the gap region projected in the rotation axis direction is 40% or more of a total projected area of the joint portion projected in the rotation axis direction.

6. The electric turbocharger according to claim 1, wherein a cooling air flow path providing communication between the outside of the motor case and a space in which a bearing of the motor unit is housed, and through which a cooling air for cooling the bearing flows is formed in the motor case, and
the gap region is provided at a position that does not overlap a cooling air flow path when viewed from the rotation axis direction.

7. The electric turbocharger according to claim 1, wherein the compressor includes:
a compressor housing; and
a diffuser plate forming a diffuser between itself and the compressor housing and joined to the motor case at the joint portion, and
the diffuser plate is made of stainless steel.
